# EUROPÄISCHE PATENTANMELDUNG

(11) **EP 1 600 252 A2**
(43) Veröffentlichungstag der Anmeldung: **30.11.2005**
(21) Anmeldenummer: 05103990.7
(22) Anmeldetag: 12.05.2005
(51) Int. Cl.: B23Q 1/26, B23B 31/08

(54) **Werkzeugantrieb, insbesondere zum automatischen Entgraten, Kantenbrechen oder Verputzen von Werkstücken**

(30) Priorität: 18.05.2004 DE 102004025061
(71) Anmelder: Alfred Jäger GmbH, 61239 Ober-Mörlen (DE)
(72) Erfinder: Glock, Herbert, 35398, Giessen-Allendorf (DE)
(74) Vertreter: Haar, Lucas Heinz Jörn

(57) **Zusammenfassung**

Ein Werkzeugantrieb zum automatischen Entgraten, Kantenbrechen oder Verputzen von Werkstücken, weist eine Halterung mit einem Sockelteil (1) zum Befestigen der Halterung an einer Aufnahme einer Werkzeugmaschine oder eines Roboters und einem den Werkzeugantrieb (3) haltenden Trägerteil (2) auf, das beweglich mit dem Sockelteil verbunden ist. Das Trägerteil (2) ist an dem Sockelteil (1) in einer Ebene beweglich gelagert, welche die Drehachse des Werkzeugantriebs rechtwinklig schneidet, und in der Ebene aus einer Mittellage in beliebige Richtungen relativ zum Sockelteil (1) bewegbar. Das Trägerteil (2) hat einen Flansch (17), der zwischen einem radial beweglichen Axiallager (18) und einem Kreuzschlittenlager (19) angeordnet ist. Der Flansch (17) ist über das Kreuzschlittenlager (19) drehfest an dem Sockelteil (1) abgestützt. Der Werkzeugantrieb (3) weist eine durch Federkraft in einer Schließstellung gehaltene Schnellspannvorrichtung (49) zum Festspannen eines Werkzeugs oder eines Werkzeughalters auf, die durch eine hydraulische oder pneumatische Betätigungsvorrichtung in eine Lösestellung bewegbar ist.

## Beschreibung

Die Erfindung betrifft einen Werkzeugantrieb mit einer Drehachse, insbesondere zum automatischen Entgraten, Kantenbrechen oder Verputzen von Werkstücken, mit einer Halterung, die ein Sockelteil zum Befestigen der Halterung an einer Aufnahme einer Werkzeugmaschine oder eines Roboters und ein den Werkzeugantrieb haltendes Trägerteil aufweist, das drehfest und derart beweglich mit dem Sockelteil verbunden ist, daß das Werkzeug quer zur Drehachse auslenkbar ist.

Werkzeugantriebe der eingangs genannten Art werden vornehmlich zum Entgraten, Kantenbrechen oder Verputzen eingesetzt. Hierbei wird das Entgratungswerkzeug mit einer numerisch gesteuerten Einrichtung, beispielsweise einer NC-Maschine oder einem Roboter, an den zu bearbeitenden Bereichen des Werkstücks, meist den Kanten entlang geführt, wobei überstehende Grate, scharfe Kanten oder dergleichen abgetragen oder geglättet werden. Um bei diesem Vorgang Unebenheiten der zu bearbeitenden Werkstücksbereiche, Werkstück- und Aufspanntoleranzen, unterschiedliche Gratbildung sowie Abnützung des Werkzeugs ausgleichen zu können, wird das Werkzeug meist mitsamt seinem Antrieb an einer Halterung angeordnet, die eine Auslenkung des Werkzeugs aus einer definierten Ruhelage ermöglicht.

Werkzeugantriebe der angegebenen Art sind aus EP 0 249 722 B1, EP 0 307 550 A1 und EP 1 052 044 A1 bekannt.

Bei der aus EP 0 249 722 B1 bekannten Halterungsvorrichtung ist der Werkzeugantrieb in einer kugelgelenkartigen Schwenkvorrichtung gehalten. Die Schwenkvorrichtung ist von einer Ausrichteeinrichtung umgeben, die einen mit Druckluft beaufschlagten O-Ring aufweist, der mit einem rohrförmigen Abstützelement zusammenwirkt. Gegen den Widerstand des O-Rings kann der Werkzeugantrieb in dem Kugelgelenk geschwenkt und das Werkzeug dadurch seitlich ausgelenkt werden, wobei sich der Anstellwinkel des Werkzeugs ändert.

Aus EP 0 307 550 A1 ist eine auswechselbare Werkzeugaufnahme für eine druckluftbetriebene Schleifspindel bekannt, die in einer Aufnahmehülse gehalten ist. Die Aufnahmehülse weist einen umlaufenden Bund mit balligem Außenrand auf, der in einer Zentrierfläche eines Sockelteils zentriert ist. Der Bund wird von vier mit einem Druckmedium druckbeaufschlagten Kolben mit einer Ausrichtfläche gegen eine Ausrichtgegenfläche des Sockelteils gedrückt. Hierdurch wird die Schleifspindel mit ihrem Werkzeug in einer Mittellage gehalten, aus der sie gegen die Ausrichtkraft der Kolben quer zu ihrer Rotationsachse ausgelenkt werden kann. Auch bei dieser Halterung ändert sich bei Auslenkung der Anstellwinkel des Werkzeugs.

Bei dem aus EP 1 052 044 A1 bekannten Werkzeughalter ist ein Werkzeugantrieb zusammen mit der Werkzeugaufnahme in einem Gehäuse 3 mittels eines Kardanlagers schwenkbar gelagert. Durch einen den Werkzeugantrieb umgebenden Rohrkolben, der mit Druckluft beaufschlagbar ist, wird der Werkzeugantrieb in einer neutralen Lage gehalten, und durch eine auf die Werkzeugaufnahme einwirkende Querkraft kann er gegen den Widerstand des Rohrkolbens ausgelenkt werden. Mit der Auslenkung ändert sich hierbei ebenfalls der Anstellwinkel des Werkzeugs.

Der Erfindung liegt die Aufgabe zugrunde, einen Werkzeugantrieb der eingangs genannten Art zu schaffen, der eine Auslenkung des Werkzeugs ohne Änderung des Anstellwinkels des Bearbeitungswerkzeugs und ein automatisches Wechseln des Bearbeitungswerkzeugs und damit die vollautomatische Durchführung unterschiedlicher Bearbeitungsvorgänge ermöglicht.

Die Aufgabe wird durch die in Patentanspruch 1 angegebene Erfindung gelöst. Vorteilhafte Ausgestaltungen der Erfindung sind in den weiteren Ansprüchen angegeben.

Die Erfindung sieht vor, daß das Trägerteil und mit diesem der Werkzeugantrieb an dem Sockelteil bezogen auf die Drehachse des Werkzeugantriebs achsparallel bewegbar gelagert ist und daß der Werkzeugantrieb eine durch Federkraft in einer Schließstellung gehaltene Schnellspannvorrichtung zum Festspannen eines Werkzeugs oder eines Werkzeughalters aufweist, die durch eine hydraulische oder pneumatische Betätigungsvorrichtung in eine Lösestellung bewegbar ist.

Durch die erfindungsgemäße Lagerung des den Werkzeugantrieb haltenden Trägerteils läßt sich der Werkzeugantrieb gemeinsam mit dem Trägerteil quer zu seiner Drehachse bewegen, wobei die Ausrichtung der Drehachse und damit auch der Anstellwinkel des angetriebenen Werkzeugs unverändert beibehalten bleiben. Es findet lediglich eine Parallelverschiebung der Drehachse des Werkzeugantriebs statt. Hierdurch ermöglicht die erfindungsgemäße Halterung eine wesentlich exaktere Bearbeitung von Werkstücken. Grate können auch in unmittelbarer Nachbarschaft von Flächen entfernt werden, ohne daß die Gefahr einer Beschädigung der Flächen beim Auslenken des Werkzeugs besteht. Beim Kantenbrechen kann die Neigung der bearbeiteten Flächen exakt eingehalten werden. Weiterhin eignet sich die erfindungsgemäße Halterung für das Bearbeiten von Rundungen. Die Winkeltreue der erfindungsgemäße Halterung hat außerdem den Vorteil, daß Bearbeitungswerkzeuge eingesetzt werden können, die für eine Bearbeitung mit sich änderndem Abstellwinkel ungeeignet sind. Durch diese Ausgestaltung des Werkzeugantriebs mit einer Schnellspannvorrichtung zum Festspannen eines Werkzeugs oder eines Werkzeughalters wird ein automatischer Wechsel des Bearbeitungswerkzeugs und damit die vollautomatische Durchführung unterschiedlicher Bearbeitungsvorgänge ermöglicht.

Die Betätigungsvorrichtung der Schnellspannvorrichtung kann im Werkzeugantrieb, im Tragteil oder im Sockelteil angeordnet sein. Als besonders vorteilhaft wird eine Anordnung der Betätigungsvorrichtung im Sockelteil angesehen, wobei die Betätigungsbewegung durch mechanische Mittel auf die Schnellspannvorrichtung des Werkzeugantriebs übertragen wird. Ein Vorteil dieser Anordnung besteht darin, daß das Gewicht der beweglich gehaltenen Teile nicht durch die Betätigungsvorrichtung erhöht wird und daß die Betätigungsvorrichtung ohne nennenswerte bauliche Nachteile einen vergleichsweise großen Kolbenquerschnitt haben kann, so daß mit vergleichsweise niedrigem, für pneumatische Systeme geeigneten Druck die erforderliche Kraft zum Lösen der Schnellspannvorrichtung erzeugt werden kann.

Vorzugsweise ist die Lagerung des Trägerteils bei dem erfindungsgemäßen Werkzeugantrieb so gestaltet, daß das Trägerteil in der Bewegungsebene aus einer Mittellage in beliebige Richtungen relativ zum Sockelteil bewegbar ist. Eine Auslenkung des Werkzeugs ist daher bei jeder Bearbeitungsrichtung möglich.

Um das Trägerteil und mit diesem das Bearbeitungswerkzeug jeweils in seine Ausgangslage zurückbewegen zu können, ist weiterhin eine Ausrichteinrichtung vorgesehen, durch welche das Trägerteil in Bezug auf seinen Bewegungsbereich in eine Mittellage bewegbar ist. Weiterhin ist das Trägerteil mit Hilfe der Ausrichteinrichtung mit einer definierten Ausrichtkraft in der Mittellage festhaltbar, so daß das Werkzeug erst ausgelenkt wird, wenn die bei der Bearbeitung auf das Werkzeug einwirkende Kraft das Äquivalent der Ausrichtkraft überschreitet. Vorzugsweise ist die Ausrichtkraft der Ausrichteinrichtung einstellbar, damit sie an den jeweiligen Bearbeitungsvorgang angepaßt werden kann. Die Ausrichtkraft kann mechanisch mittels Federn, pneumatisch oder hydraulisch oder auch elektromagnetisch erzeugt werden. Wird die Ausrichteinrichtung verriegelt oder eine ausreichend hohe Ausrichtkraft eingestellt, so können mit dem erfindungsgemäßen Werkzeugantrieb leichte Fräsarbeiten durchgeführt werden.

In einer vorteilhaften Ausgestaltung der Ausrichteinrichtung weist das Trägerteil einen Zentrierkonus auf, der mit einem an einem Zentrierkolben angeordneten Gegenkonus zusammenwirkt, wobei der Zentrierkolben in einem Zylinder des Sockelteils angeordnet und durch Beaufschlagung mit einem Druckmittel bewegbar ist. Durch Druckbeaufschlagung des Zentrierkolbens gelangt der Zentrierkonus mit dem Gegenkonus in Eingriff und wird durch diesen gemeinsam mit dem Trägerteil in eine zentrische Lage gedrückt. Umgekehrt kann durch eine auf das Trägerteil einwirkende Auslenkkraft der Zentrierkonus den Zentrierkolben über seinen Gegenkonus gegen den Widerstand der Druckbeaufschlagung in dem Zylinder axial verschieben und dadurch eine Werkzeugauslenkung ermöglichen. Die Ausricht- bzw. Auslenkkraft wird hierbei durch den Winkel von Zentrierkonus und Gegenkonus und die auf den Zentrierkolben einwirkende Druckkraft bestimmt. Vorzugsweise haben der Zentrierkonus und der Gegenkonus eine Neigung von 45°. Anstelle mit einem Druckmittels kann der Zentrierkolben auch mit einer Federkraft beaufschlagt sein.

Eine andere vorteilhafte Ausgestaltung der Ausrichteinrichtung kann zwei oder mehr in Richtung der Bewegbarkeit des Trägerteils aus einer Nullstellung bewegbare pneumatische Aktoren aufweisen, die einerseits an dem Trägerteil und andererseits an dem Sockelteil abgestützt sind und aus einer die Mittellage definierenden Nullstellung heraus bewegbar sind. Werden auf zwei sich rechtwinklig kreuzenden Achsen jeweils zwei Aktoren gegenüberliegend angeordnet, so kann durch unterschiedliche Druckbeaufschlagung der einzelnen Aktoren die Ausrichtkraft in jeder Richtung individuell eingestellt werden.

Eine vorteilhafte Lagerung des Trägerteils kann erfindungsgemäß darin bestehen, daß das Trägerteil einen Flansch aufweist, der zwischen einem radial beweglichen Axiallager und einem Kreuzschlittenlager angeordnet ist, wobei der Flansch über das Kreuzschlittenlager drehfest an dem Sockelteil abgestützt ist. Sowohl das Axiallager als auch das Kreuzschlittenlager sind als Wälzlager, insbesondere Kugellager, ausgebildet. Die erfindungsgemäße Lagerung erlaubt eine leichtgängige Bewegung des Trägerteils gegenüber dem Sockelteil in beliebiger Richtung und bewirkt eine drehfeste Abstützung des Trägerteils an dem Sockelteil ohne Einschränkung der Beweglichkeit.

Nach einem weiteren Vorschlag der Erfindung kann vorgesehen sein, daß der Werkzeugantrieb in dem Trägerteil in Richtung der Drehachse längsbeweglich gelagert und drehfest abgestützt ist. Durch diese Ausbildung wird zusätzlich zu der Möglichkeit einer Werkzeugauslenkung quer zu Drehachse des Werkzeugs oder unabhängig davon die Möglichkeit einer Auslenkung des Werkzeugs in Richtung seiner Drehachse geschaffen. Die Werkzeugauslenkung in axialer Richtung ist insbesondere vorteilhaft, wenn Bearbeitungswerkzeuge eingesetzt werden, die einen kegligen oder kugelförmigen Bearbeitungsbereich haben. So können mit solchen Bearbeitungswerkzeugen vorteilhaft gegenüberliegende Kanten, z.B. an schmalen Nuten oder Engstellen gleichzeitig bearbeitet werden. Außerdem wird durch diese Ausgestaltung die Zahl der Anwendungsmöglichkeiten der erfindungsgemäßen Werkzeugantrieb erweitert und beispielsweise das Arbeiten mit Gravurwerkzeugen ermöglicht.

Vorzugsweise ist die axiale Bewegung des Werkzeugantriebs durch Anschlagflächen am Trägerteil begrenzt. Bei vertikaler Ausrichtung der Drehachse wird der Werkzeugantrieb durch sein Gewicht in Anlage an einem der Anschläge gehalten. Das Gewicht des Werkzeugantriebs kann allein zur Erzeugung der bei Bearbeitungsvorgängen gewünschten axialen Ausrichtkraft dienen, wenn der Werkzeugantrieb mit dem Werkzeug nach unten gerichtet ist.

Um auch bei anderen Raumlagen der Drehachse eine geeignete axiale Ausrichtkraft zur Verfügung stellen zu können und/oder um die Ausrichtkraft erhöhen oder erniedrigen zu können, kann nach einem weiteren Vorschlag der Erfindung vorgesehen sein, daß das Trägerteil einen Zylinder mit einem in Richtung der Drehachse des Werkzeugantriebs bewegbaren und mit einem Druckmittel beaufschlagbaren Kolben aufweist und daß der Werkzeugantrieb durch den Kolben in Richtung des Werkzeugs und/oder in der Gegenrichtung mit einer definierten Kraft belastbar ist. Durch geeignete Druckbeaufschlagung dieses Kolbens ist es weiterhin möglicht, das Gewicht des Werkzeugantriebs auszugleichen.

Damit die Druckmittelzufuhr zu dem Zylinder im Tragteil die Bewegbarkeit des Tragteils nicht beeinträchtigen kann, ist der Zylinder im Tragteil vorzugsweise mittels einer flexiblen Leitung an einen Druckmittelanschluß im Sockelteil angeschlossen.

Der Werkzeugantrieb kann erfindungsgemäß einen hochtourigen, insbesondere frequenzgesteuerten Elektromotor aufweisen. Die erfindungsgemäße Werkzeugantrieb eignet sich aber gleichermaßen auch für einen mit Luft oder Wasser angetriebenen Antriebsmotor.

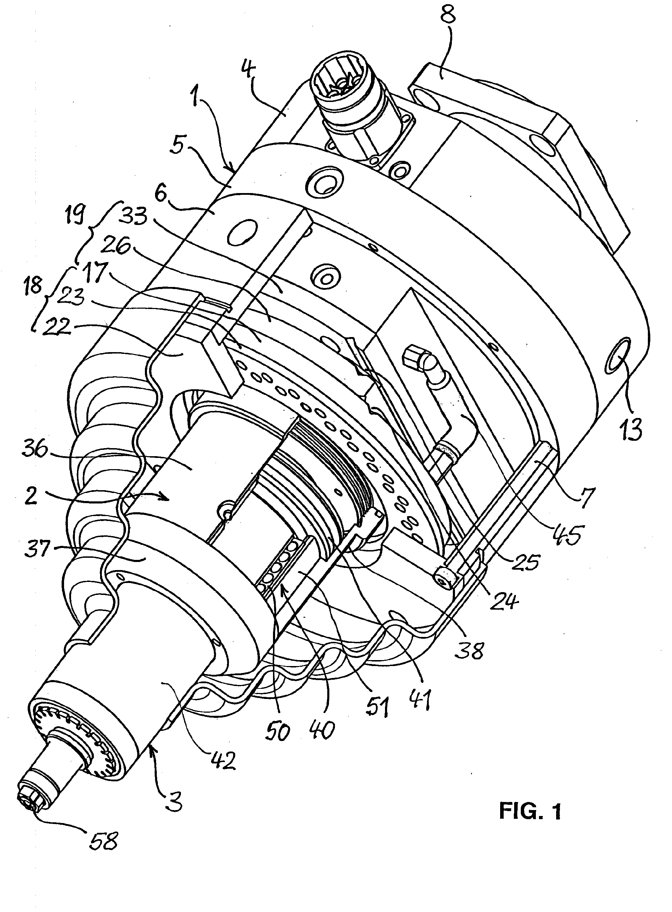

Die Erfindung wird nachfolgend anhand eines Ausführungsbeispiels näher erläutert, das in der Zeichnung dargestellt ist. Es zeigen
- Figur 1: eine perspektivische Darstellung eines Werkzeugantriebs und einer Halterung nach der Erfindung, teilweise geschnitten,
- Figur 2: einen Querschnitt des Werkzeugantriebs und der Halterung gemäß Figur 1 und
- Figur 3: eine Explosionsdarstellung der Lagerung des Trägerteils der Halterung gemäß Figur 1.

Die in der Zeichnung dargestellte Halterung umfaßt ein Sockelteil 1 und ein Trägerteil 2, in welchem ein Werkzeugantrieb 3 angeordnet ist. Das Sockelteil 1 hat die Form eines zylindrischen Gehäuses, das aus einem Kopfteil 4, einem Mittelteil 5 und einem Fußteil 6 gebildet ist, die durch Verbindungsschrauben 7 fest miteinander verbunden sind. An dem Kopfteil 4 ist ein Aufnahmeflansch 8 angeordnet, der zur Befestigung der Halterung an einer Werkzeugaufnahme eines Roboters oder einer Werkzeugmaschine dient. Anstelle des Aufnahmeflansches 8 kann an dem Kopfteil 4 auch ein Werkzeugkegel angebracht sein.

Angrenzend an das Kopfteil 4 weist das Mitteilteil 5 eine Zylinderkammer 9 auf, die durch das Kopfteil 4 dicht verschlossen ist. In der Zylinderkammer 9 befindet sich ein Betätigungskolben 10, der mit Hilfe von Druckfedern 11 in Anlage an dem Kopfteil 4 gehalten wird. Der Betätigungskolben 10 weist eine rohrförmige Kolbenstange 12 auf, die in zylindrischen Bohrungen des Kopfteils 4 und des Mittelteils 5 geführt und abgedichtet ist und sich durch das Mittelteil 5 hindurch erstreckt. Durch die Kolbenstange 12 können die elektrischen oder pneumatischen Leitungen zur Energieversorgung des Werkzeugantriebs geführt werden. Zur Druckbeaufschlagung des Betätigungskolbens 10 ist in dem Kopfteil 4 eine mit einer Druckmittelquelle verbindbare Anschlußbohrung 13 vorgesehen.

Auf seiner dem Fußteil 6 zugekehrten Unterseite hat das Mitteilteil 5 eine ringförmige, zylindrische Ausnehmung, in der ein ringförmiger Zentrierkolben 14 und eine diesen umgebende Zylinderhülse 15 angeordnet sind. Die Zylinderhülse 15 ist durch Preßsitz in der Ausnehmung des Mittelteils 5 gehalten. Der Zentrierkolben 14 begrenzt eine von der Ausnehmung und der Zylinderhülse 15 gebildete Druckkammer und weist auf seiner dem Mittelteil 5 abgekehrten Unterseite eine Hohlkegelfläche 16 mit einem Neigungswinkel von 45° auf.

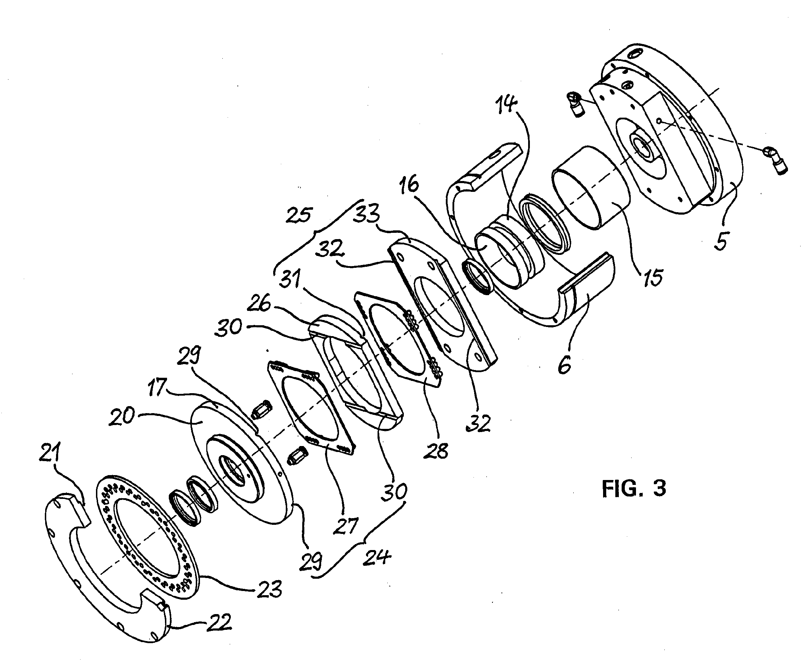

In dem hohlzylindrischen Fußteil 6 ist ein kreisscheibenförmiger Flansch 17 des Trägerteils 2 mit Hilfe eines Axiallagers 18 und eines Kreuzschlittenlagers 19 in einer zur Drehachse des Werkzeugantriebs 3 rechtwinkligen Ebene allseits beweglich gelagert. Wie insbesondere aus Figur 3 zu ersehen, weist der Flansch 17 zur Bildung des Axiallagers 18 auf seiner Unterseite eine ebene, kreisringförmige Lagerfläche 20 auf, der eine ebene, kreisringförmige Gegenlagerfläche 21 eines am unteren Ende des Fußteils 6 befestigten Lagerrings 22 gegenüberliegt. Zwischen der Lagerfläche 20 und der Gegenlagerfläche 21 ist ein mit Kugeln bestückter Käfigring 23 angeordnet. In radialer Richtung ist zwischen dem Flansch 17 und dem Käfigring 23 einerseits und dem diese umgebenden Fußteil 6 sowie dem Lagerring 22 andererseits ein ringförmiger Freiraum vorhanden, so daß sich der Flansch 17 von der dargestellten Mittellage ausgehend auf den Kugeln rollend nach allen Seiten radial bewegen kann.

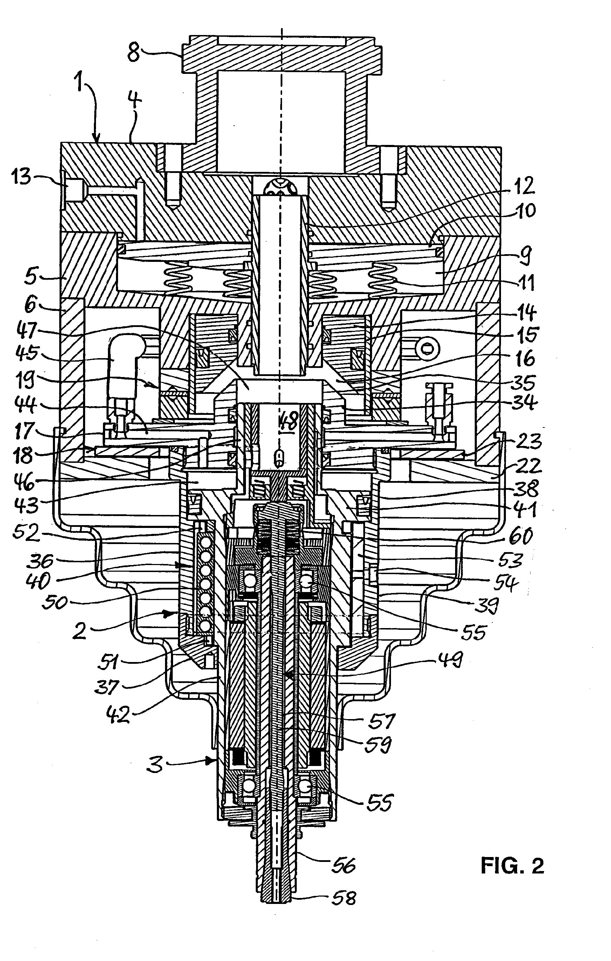

Das Kreuzschlittenlager 19 ist zwischen dem Flansch 17 und dem Mitteilteil 5 angeordnet. Es umfaßt zwei zu dem Axiallager 18 parallele Linearlager 24, 25, die rechtwinklig zueinander angeordnet und durch einen beiden gemeinsamen Lagerring 26 voneinander getrennt sind. Jedes Linearlager 24 bzw. 25 besteht aus zwei Linearkugellagern mit einem gemeinsamen, ringförmigen Kugelkäfig 27 bzw. 28. Die Kugeln des Linearlagers 24 sind in einander gegenüberliegenden, im Querschnitt V-förmigen Nuten 29, 30 angeordnet, die in dem Flansch 17 und dem Lagerring 26 ausgebildet sind. Die Kugeln des Linearlagers 25 sind in einander gegenüberliegenden, im Querschnitt V-förmigen Nuten 31, 32 angeordnet, die in dem Lagerring 26 einerseits und in einem mit dem Mittelteil 5 fest verbundenen Lagerring 33 andererseits angeordnet sind. Durch die beschriebene Gestaltung des Kreuzschlittenlagers 19 kann sich der Lagerring 26 gegenüber dem Lagerring 33 senkrecht zur Zeichnungsebene in Figur 2 und der Flansch 17 gegenüber dem Lagerring 26 parallel zur Zeichnungsebene in Figur 2 bewegen. Da beide Bewegungen gleichzeitig ausführbar sind, sich also überlagern können, ist eine Bewegung des Flansches 17 und damit des Trägerteils 2 in alle radialen Richtungen auch durch das Kreuzschlittenlager 19 gegeben. Im Gegensatz zu dem Axiallager 18 läßt das Kreuzschlittenlager 19 jedoch keine Drehung des Flansches 17 gegenüber dem Lagerring 26 und auch keine Drehung des Lagerrings 26 gegenüber dem Lagerring 33 zu. Das Kreuzschlittenlager 19 sorgt daher für eine drehfeste Abstützung des Trägerteils 2 in dem Sockelteil 1.

Der Flansch 17 weist auf seiner Oberseite ein Zentrierkonus 34 mit einer sich in Richtung des diesem gegenüberliegenden Zentrierkolbens 14 verjüngenden Kegelfläche 35 auf, die eine Neigung von 45° hat. Wird der Zentrierkolben 14 über nicht näher dargestellte Anschlußleitungen im Mittelteil 5 mit Druck beaufschlagt, so gelangt seine Hohlkegelfläche 16 mit der Kegelfläche 35 des Zentrierkonus 34 in Kontakt und richtet dadurch den Zentrierkonus 34 und mit diesem das Trägerteil 2 mittig zur Längsachse des Sockelteils 1 aus. Die Größe der hierbei auf den Zentrierkonus einwirkenden und zur Mitte gerichteten Kraft bestimmt auch den Widerstand, den das Trägerteil 2 einer Verschiebung aus seiner Mittellage entgegensetzt. Die Größe dieser zentrierenden bzw. einer Auslenkung des Trägerteils 2 entgegenwirkenden Kraft ist von der Druckbeaufschlagung des Zentrierkolbens 14 abhängig und kann durch Einstellung dieses Drucks dem jeweiligen Bedürfnis angepaßt werden.

Das Trägerteil 2 weist eine mit dem Flansch 17 fest verschraubte Hülse 36 auf, in welcher der Werkzeugantrieb 3 gelagert ist. Am unteren, dem Flansch 17 abgekehrten Ende der Hülse 36 befindet sich ein Anschlagring 37. Die Hülse 36 bildet angrenzend an den Flansch 17 einen Zylinder 38. An den Zylinder 38 schließt sich ein Lagerbereich 39 an, der ein Linearlager 40 zur längsbeweglichen Lagerung des Werkzeugantriebs 3 enthält.

Der Zylinder 38 nimmt einen als Kolben 41 ausgebildeten Abschnitt des Gehäuses 42 des Werkzeugantriebs 3 auf. Der Kolben 41 begrenzt eine Zylinderkammer 43, die über Anschlußleitungen 44 im Flansch 17, eine flexible Verbindungsleitung 45 und nicht dargestellte Leitungen im Mittelteil 5 mit einer Druckmittelquelle verbindbar ist. Ein zylindrischer Abschnitt 46 des Gehäuses 42, der einen gegenüber dem Kolben 41 kleineren Durchmesser hat, erstreckt sich von dem Kolben 41 durch die Zylinderkammer 43 in eine den Flansch 17 und den Zentrierkonus 34 durchdringende Zylinderbohrung 47 und ist an zwei im Abstand voneinander angeordneten Stellen mittels Dichtringen gegenüber der Zylinderbohrung 47 abgedichtet. In dem Abschnitt 46 befindet sich ein topfförmiges Betätigungselement 48, das zur Betätigung einer Schnellspannvorrichtung 49 des Werkzeugantriebs 3 dient.

Zur Bildung des Linearlagers 40 sind zwischen dem Gehäuse 42 und der Hülse 36 in einem Winkelabstand von 120° achsparallele Linearkugellager 50 angeordnet. Die in einem Käfig gehaltenen Kugeln der Linearkugellager 50 greifen einerseits in eine Nut 51 in der Umfangsfläche des Gehäuses 42 ein und stützen sich andererseits an einander gegenüberliegenden, zu einer Radialebenen geneigten Lagerflächen 52 ab, die an den Stirnkanten von drei in der Hülse 36 angeordneten Lagersegmenten 53 ausgebildet sind. Die Lagersegmente 51 sind durch Schrauben 54 in der Hülse 36 gehalten.

Durch die Linearkugellager 50 ist der Werkzeugantrieb 3 in dem Trägerteil 2 in axialer Richtung leichtgängig beweglich gehalten. Der Werkzeugantrieb 3 kann daher bei Bearbeitungsvorgängen auch in axialer Richtung ausweichen, wenn der Verlauf der Werkstückskontur dies fordert. Der Bewegungswiderstand, der zur Erzielung einer axialen Auslenkung des Werkzeugs überwunden werden muß, kann durch Druckbeaufschlagung des Kolbens 41 bestimmt und verändert werden. Auch eine Druckbeaufschlagung mit Unterdruck ist möglich, um bei vertikaler Ausrichtung der Drehachse die der Werkzeugauslenkung entgegenwirkende, aus dem Gewicht des Werkzeugantriebs 3 resultierende Kraft herabzusetzen.

Der dargestellte Werkzeugantrieb 3 enthält eine elektrisch angetriebene, in Wälzlagern 55 gelagerte Spindel 56. Die Spindel 56 ist mit einer durchgehenden Längsbohrung 57 versehen, die an ihrem äußeren Ende einen konisch erweiterten Abschnitt zur Aufnahme einer Spannzange 58 aufweist. Eine Schnellspannvorrichtung 49 mit einem Tellerfederpaket 60 ist durch einen Stößel 61 mit der Spannzange 58 verbunden und hält diese mittels Federkraft geschlossen.

Soll die Spannzange 58 zum Einsetzen oder Wechseln eines Werkzeugs geöffnet werden, so werden der Zentrierkolben 14 und der Betätigungskolben 10 nacheinander mit Druckmittel, beispielsweise Druckluft, beaufschlagt. Durch den Zentrierkolben 14 wird der Werkzeugantrieb 3 zentriert und in der zentrierten Lage gehalten. Der Betätigungskolben 10 wird dann entgegen der Kraft der Druckfedern 11 in Richtung des Werkzeugantriebs 3 bewegt. Hierdurch gelangt die Kolbenstange 12 in Kontakt mit dem Betätigungselement 48, welches die Kolbenkraft auf den Stößel 61 überträgt und unter Zusammendrücken des Tellerfederpakets 60 die Spannzange 58 öffnet. Ist das Werkzeug eingesetzt oder gewechselt, so wird durch Druckentlastung des Betätigungskolbens 10 die Spannzange 58 mittels Federkraft wieder geschlossen. Während des Öffnens der Schnellspannvorrichtung 49 stützt sich der Werkzeugantrieb 3 über den Kolben 41 an der Hülse 36 des Trägerteils 2 ab. Die Größe der axialen Auslenkbewegung des Werkzeugsantriebs 3 wird durch den Axialhub des Kolbens 41 bestimmt. Zudem ist zwischen der Kolbenstange 12 und dem Betätigungselement 48 ein wenigstens dem Axialhub des Kolbens 41 entsprechender Zwischenraum vorgesehen.

## Patentansprüche

1. Werkzeugantrieb mit einer Drehachse, insbesondere zum automatischen Entgraten, Kantenbrechen oder Verputzen von Werkstücken, mit einer Halterung, die ein Sockelteil zum Befestigen der Halterung an einer Aufnahme einer Werkzeugmaschine oder eines Roboters und ein den Werkzeugantrieb haltendes Trägerteil aufweist, das drehfest und derart beweglich mit dem Sockelteil verbunden ist, daß das Werkzeug quer zur Drehachse auslenkbar ist, **dadurch gekennzeichnet, daß** das Trägerteil (2) und mit diesem der Werkzeugantrieb (3) an dem Sockelteil (1) bezogen auf die Drehachse des Werkzeugantriebs (3) achsparallel bewegbar gelagert ist und daß der Werkzeugantrieb (3) eine durch Federkraft in einer Schließstellung gehaltene Schnellspannvorrichtung (49) zum Festspannen eines Werkzeugs oder eines Werkzeughalters aufweist, die durch eine hydraulische oder pneumatische Betätigungsvorrichtung in eine Lösestellung bewegbar ist.

2. Werkzeugantrieb nach Anspruch 1, **dadurch gekennzeichnet, daß** die hydraulische oder pneumatische Betätigungsvorrichtung in dem Sockelteil (1) angeordnet ist und mechanische Mittel zur Übertragung der Betätigungsbewegung auf die Schnellspannvorrichtung (49) des Werkzeugantriebs (3) aufweist.

3. Werkzeugantrieb nach einem der Ansprüche 1 oder 2, **dadurch gekennzeichnet, daß** das Trägerteil (2) in der Ebene aus einer Mittellage in beliebige Richtungen relativ zum Sockelteil (1) bewegbar ist.

4. Werkzeugantrieb nach einem der vorhergehenden Ansprüche, **dadurch gekennzeichnet, daß** eine Ausrichteinrichtung vorgesehen ist, durch welche das Trägerteil (2) in Bezug auf seinen Bewegungsbereich in eine Mittellage bewegbar und mit einer definierten Ausrichtkraft in der Mittellage festhaltbar ist,

5. Werkzeugantrieb nach einem der vorhergehenden Ansprüche, **dadurch gekennzeichnet, daß** die Ausrichtkraft der Ausrichteinrichtung einstellbar ist.

6. Werkzeugantrieb nach einem der vorhergehenden Ansprüche, **dadurch gekennzeichnet, daß** das Trägerteil (2) einen Zentrierkonus (34) aufweist, der zur Ausrichtung des Trägerteils (2) mit einem an einem Zentrierkolben (14) angeordneten Gegenkonus zusammenwirkt, wobei der Zentrierkolben (14) in einem Zylinder des Sockelteils (1) angeordnet und durch Beaufschlagung mit einem Druckmittel bewegbar ist.

7. Werkzeugantrieb nach Anspruch 6, **dadurch gekennzeichnet, daß** das Sockelteil (1) eine ringförmige, zylindrische Ausnehmung aufweist, in welcher der ringförmig ausgebildete Zentrierkolben (14) angeordnet ist und daß in einer zur Ausnehmung koaxialen Bohrung des Sockelteils (1) eine Kolbenstange (12) angeordnet ist, welche die Betätigungsbewegung der Betätigungsvorrichtung auf die Schnellspannvorrichtung (49) überträgt.

8. Werkzeugantrieb nach einem der vorhergehenden Ansprüche, **dadurch gekennzeichnet, daß** das Trägerteil (2) einen Flansch (17) aufweist, der zwischen einem radial beweglichen Axiallager (18) und einem Kreuzschlittenlager (19) angeordnet ist und daß der Flansch (17) über das Kreuzschlittenlager (19) drehfest an dem Sockelteil (1) abgestützt ist.

9. Werkzeugantrieb nach einem der vorhergehenden Ansprüche, **dadurch gekennzeichnet, daß** der Werkzeugantrieb (3) in dem Trägerteil (2) in Richtung der Drehachse längsbeweglich gelagert und drehfest abgestützt ist.

10. Werkzeugantrieb nach Anspruch 9, **dadurch gekennzeichnet, daß** die axiale Bewegung des Werkzeugantriebs (3) durch Anschlagflächen am Trägerteil (2) begrenzt ist.

11. Werkzeugantrieb nach einem der Ansprüche 9 oder 10, **dadurch gekennzeichnet, daß** das Trägerteil (2) einen Zylinder (38) mit einem in Richtung der Drehachse des Werkzeugantriebs bewegbaren und mit einem Druckmittel beaufschlagbaren Kolben (41) aufweist und daß der Werkzeugantrieb (3) durch den Kolben (41) in Richtung des Werkzeugs und/oder in der Gegenrichtung mit einer definierten Kraft belastbar ist.

12. Werkzeugantrieb nach Anspruch 11, **dadurch gekennzeichnet, daß** der Kolben (41) im Zylinder (38) des Trägerteils (2) mit einem das Gewicht des Werkzeugantriebs (3) ausgleichenden Druck beaufschlagbar ist.

13. Werkzeugantrieb nach Anspruch 11 oder 12, **dadurch gekennzeichnet, daß** der Zylinder (38) im Trägerteil (2) mittels einer flexiblen Leitung (45) an einen Druckmittelanschluß im Sockelteil (1) angeschlossen ist.
